# EUROPÄISCHE PATENTSCHRIFT

(11) **EP 1 086 983 B1**
(45) Veröffentlichungstag und Bekanntmachung des Hinweises auf die Patenterteilung: **13.06.2001**
(21) Anmeldenummer: 99118833.5
(22) Anmeldetag: 24.09.1999
(51) Int. Cl.: C08K 5/00, C08G 69/20, C08G 69/14

(54) **Verfahren zur Herstellung von Formkörpern mit Farbkodierung aus Polyamiden**
Process for preparation of molded article of polymamide with color coding
Procédé de fabrication d'articles moulés en polyamide avec codage couleur

(43) Veröffentlichungstag der Anmeldung: 28.03.2001
(73) Patentinhaber: Schwartz GmbH, 46509 Xanten/Ndrh. (DE)
(72) Erfinder: Nussdorfer, Bernd, 47638 Straelen (DE); Peiffer, Albrecht, 40629 Düsseldorf (DE)
(74) Vertreter: Stenger, Watzke & Ring Patentanwälte

(56) Entgegenhaltungen:
- BE-A- 647 696
- US-A- 5 837 181

## Beschreibung

Die vorliegende Erfindung betrifft ein Verfahren zur Herstellung von Formkörpern mit Farbkodierung aus Polyamiden mittels Polymerisation von Lactamen.

Formkörper aus Polyamiden finden im Stand der Technik vielseitige Verwendung. Durch ihre hervorragenden mechanischen Eigenschaften haben sie große Bedeutung beispielsweise als Konstruktionswerkstoffe für hochbelastbare Maschinenelemente gefunden. Sie weisen eine hohe Festigkeit, große Zähigkeit und insbesondere starken Widerstand gegen Verschleiß auf. Polyamide sind gegen die meisten organischen Lösungsmittel, Öle, Fette und schwache Laugen beständig. Zudem sind sie über weite Temperaturbereiche einsetzbar, die sich von ca. minus 40° C bis etwa 80° C bzw. 130° C je nach Sorte des Polyamids erstrecken. Als Thermoplasten sind sie zudem mit mäßigem Aufwand nahezu vollständig recyclingfähig.

Von Natur aus sind Polyamide milchig-durchscheinend. Nun können aber je nach Einsatzgebiet Farbkodierungen von aus Polyamiden gebildeten Formkörpem von Bedeutung sein. Solche Einfärbungen können bspw. bei entsprechender Verwendung der aus den Polyamiden gebildeten Formkörpern zur Erzielung von Warn- oder Signalwirkungen dienen, sie können aber auch eine Sortiment- oder Produktunterscheidung optisch unterstützen oder ggfs. eine herstellerspezifische Unterscheidungskraft erzeugen.

Dabei sind zwei grundsätzliche Arten der Einfärbung von aus Polyamiden gebildeten Formkörpern denkbar. In einem ersten Fall ist es möglich, die nach der Polymerisation milchig-durchscheinenden Formkörper durch Aufbringen einer farbig deckenden Schicht äußerlich einzufärben. Diese Methode beinhaltet den Nachteil, daß eine solche farbliche Kodierung nur an der Oberfläche des Formkörpers geschieht und diese somit durch Verschleiß der Oberfläche oder mechanischer Einwirkungen, wie bspw. thermische Ausdehnung, verlorengehen kann.

Eine zweite Möglichkeit des Einfärbens eines Polyamidformköpers besteht darin, den Ausgangsstoffen, in diesem Fall Lactamen, vor deren Polymerisation zu Polyamid bereits farbgebende Stoffe beizumengen, die während der Polymerisation in das dadurch gebildete Polyamidmaterial eingebunden werden. Dabei können die späteren Formkörper aus dem so dargestellten farbigen Polyamid durch weitere Formgebungsverfahren gewonnen werden, oder die Polymerisation erfolgt direkt in Formen, die einen Hohlraum aufweisen, der die Form des späteren Formkörpers hat, so daß weitere Formgebungsprozesse nicht mehr nötig sind.

Nachteil des letztgenannten Farbkodierungsverfahrens ist, daß alle im Stand der Technik bekannten, eine Einfärbung des Polyamides bewirkenden Stoffe in den zur Erzielung der gewünschten Einfärbung notwendigen Konzentrationen einen negativen Einfluß auf die Polymerisation haben. So wird vielfach bei durch Zugabe von Farbstoffen vor der Polymerisation eingefärbtem Polyamid eine im Vergleich zu mit einem analogen Verfahren ungefärbt hergestellten Polyamid kleinere Kristallitgröße festgestellt. Diese wiederum bewirkt verschlechterte Eigenschaften des Werkstoffes. So kommt es schneller zu einer Versprödung und auch die Verschleißfestigkeit des so eingefärbten Polyamides nimmt im Vergleich zu der des ungefärbten Polyamids ab. Ein weiterer Nachteil liegt darin, daß im Stand der Technik genutzte Farbpigmente sich in den in Form von Lactamschmelzen dargebotenen Ausgangsmaterialien für die Polymerisation nicht lösen. Dadurch kann es zu einer ungleichmäßigen Verfärbung des durch Polymerisation von mit solchen Pigmenten versetzten Lactamschmelzen gebildeten Polyamides kommen.

Davon ausgehend liegt der Erfindung die **Aufgabe** zugrunde, ein Verfahren zur Herstellung von Formkörpern mit Farbcodierungen aus Polyamiden zu schaffen, das eine über das Volumen gleichmäßige Einfärbung des Polyamides erlaubt, und dabei die Materialeigenschaften des Polyamides nicht verschlechtert.

Zur technischen **Lösung** dieser Aufgabe wird vorgeschlagen, in ein oben dargelegtes Verfahren einen im zeitlichen Verfahrensablauf vor der Polymerisation liegenden Verfahrensschritt einzufügen, in dem einer Ausgangsmenge der zu polymerisierenden Lactame ein Chromkomplex-Farbstoff zugegeben wird, welcher während der Polymerisation in das dabei entstehende Polyamid eingebunden wird.

Zur Bildung der Formkörper werden die Lactame in eine Gußform verbracht, wo die Polymerisation stattfindet.

Bei Versuchen zur Darstellung von Formkörpern aus eingefärbtem Polyamid hat sich herausgestellt, daß die Zugabe eines Chromkomplex-Farbstoffes, insbesondere eines Monoazo-Chromkomplex-Farbstoffes und hierbei speziell eines Monoazo 1:2 Chromkomplex-Farbstoffes, zu einer Ausgangsmenge der zu polymerisierenden Lactame die Eigenschaften des mit dem Verfahren gewonnenen Polyamides verglichen mit den Eigenschaften eines ohne Zugabe eines solchen Farbstoffes hergestellten Polyamides nicht bzw. nur geringfügig verändert. So zeigten beispielsweise vergleichende mikroskopische Untersuchungen annähernd gleiche Kristallitstrukturen und -größen von gefärbtem und ungefärbtem Polyamid.

Ein weiterer Vorteil ist dadurch gegeben, daß der oben genannte Farbstoff in als Ausgangsmenge zur Polymerisation genutzten Lactamschmelzen löslich ist. Dadurch wird eine optimale Verteilung des Farbstoffes und daraus resultierend eine gleichmäßige Einfärbung des durch Polymerisation gebildeten Polyamides über das gesamte Volumen erzielt.

Ein weiterer Vorteil ergibt sich aufgrund der stark farbgebenden Eigenschaften der oben genannten Farbstoffe, da somit äußerst geringe Konzentrationen zur gewünschten Farbkodierung des Polyamides ausreichen.

Bei der Herstellung von Formkörpern aus Polyamiden ist es von Vorteil, mindestens zwei Lactame enthaltende Ausgangsmengen zur Polymerisation zusammenzuführen. Dabei kann eine erste Ausgangsmenge neben den Lactamen Zusätze enthalten, die als Katalysatoren wirken, und eine zweite Ausgangsmenge neben den Lactamen als Aktivatoren wirkende Zusätze aufweisen.

Es ist hierbei von Vorteil, den Farbstoff vor dem Zusammenführen der Ausgangsmengen in die zweite Ausgangsmenge mit den Aktivatoren zu geben.

Die Ausgangsmengen werden vor dem Zusammenführen zur Polymerisation zweckmäßigerweise erwärmt. Eine Erwärmung wird dabei auf Temperaturen von 100° C bis 200° C vorgenommen. Für die Polymerisation von Polyamid-6 haben sich Temperaturen im Bereich von 110° C bis 130° C als vorteilhaft erwiesen, wohingegen für die Polymerisation von Polyamid-12 Temperaturen von 155° C bis 175° C gewählt werden.

Die Polymerisation der Lactame wird hierbei in vorteilhafterweise in Gußformen durchgeführt, in die die Lactame enthaltenden Ausgangsmengen eingegossen oder eingespritzt werden und die die Form des zu erzeugenden Formkörpers repräsentieren. Dabei ist es von Vorteil, wenn auch die Gußformen vor der Durchführung der Polymerisation und vor dem Einfügen der Ausgangsmengen erwärmt werden. Besonders von Vorteil ist hierbei eine Erwärmung der Formen auf eine die Polymerisation begünstigende Temperatur. Zur Unterstützung einer gleichmäßigen und lufteinschlußfreien Bildung von Formkörpern kann die entsprechende Gußform um eine oder mehrere Achsen rotieren und/oder mit zusätzlichem Druck beaufschlagt werden.

Im Falle zweier getrennter Ausgangsmengen können diese erst in der Form oder aber auch bereits vorher, bspw. auf dem Weg zur Gußform entlang einer definierten Mischstrecke, durchmischt werden.

Geeignete Katalysatoren sind zum Beispiel Alkali- und Erdalkaliverbindungen von Lactamen, wie bspw. Natriumlaurinlactamat zur Darstellung von Polyamid-12 oder Natriumcaprolactamat zur Darstellung von Polyamid-6, aber auch andere aus dem Stand der Technik bekannte Verbindungen.

Als Aktivatoren können bspw. Ketene, Zyanamide oder weitere aus dem Stand der Technik bekannte Verbindungen Verwendung finden.

Von besonderem Interesse ist ein erfindungsgemäßes Verfahren, wenn hierbei Polyamid-12 durch Polymerisation von Laurinlactamen gebildet wird.

Ein weiteres Polyamid von Interesse ist das Polyamid-6, welches durch Polymerisation von Caprolactam mittels eines erfindungsgemäßen Verfahrens gefertigt wird.

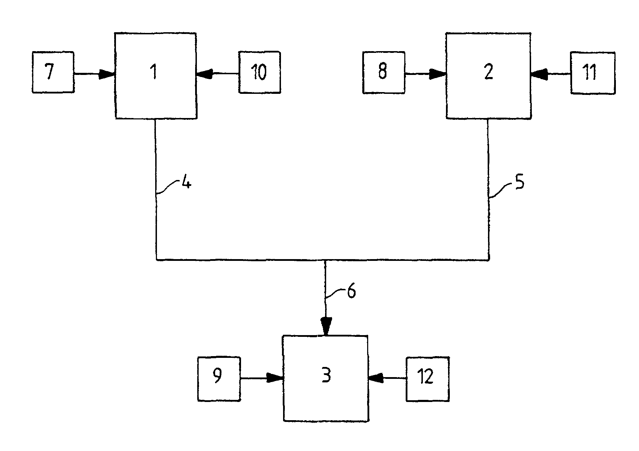

Zur näheren Erläuterung wird im folgenden ein beispielhafter Verfahrensablauf geschildert, wie er in Fig. 1 dargestellt ist. Dabei zeigt:
- Fig. 1: den Ablauf eines erfindungsgemäßen Verfahrens in einem schematischen Blockdiagramm.

Bei dem in Fig. 1 schematisch dargestellten Verfahren handelt es sich um ein sogenanntes 2-Topf-Vakuumverfahren, in dem Lactame als Ausgangsmengen 1, 2 über Zuläufe 4, 5 einer Mischstrecke 6, zugeführt werden, die in einer Gießform 3 endet. Der Übergang der Mischstrecke in die Gießform kann durch eine Einspritzdüse gebildet werden, so daß die gemischten Lactame im Spritzgußverfahren in die Gießform 3 gebracht werden.

Die Ausgangsmenge 1 enthält dabei neben den Lactamen einen Katalysator, bspw. ein Natriumlactamat. Dahingegen enthält die Ausgangsmenge 2 neben den Lactamen einen Aktivator und zusätzlich den Chromkomplex-Farbstoff, in diesem Fall eines Monoazo 1:2 Chromkomplex-Farbstoff.

Über mit Temperaturregelungen 7, 8, 9 versehene Aufheizvorrichtungen (hier nicht gezeigt) werden sowohl die Ausgangsmengen 1 und 2 als auch die Gießform 3 auf die jeweils gewünschte Temperatur gebracht und auf dieser gehalten.

Zur Einstellung weiterer Prozeßparameter sind sowohl für die Ausgangsmengen 1, 2 als auch für die Gießform 3 Regelungen für weitere Prozeßparameter vorgesehen. Zu weiteren Prozeßparametern gehören bspw. der Prozeßdruck und die Prozeßdauer.

Zur Herstellung eines Formteils aus Polyamid werden nun die Ausgangsmengen 1 und 2 über die Zuläufe 4 und 5, die Mischstrecke 6 und den hier nicht dargestellten Einlaß, bspw. eine Düse, in die Gießform gebracht. Dort polymerisieren sie unter Veränderung der Viskosität, angeregt durch die Aktivator- und Katalysatorsubstanzen zu dem Formkörper aus Polyamid, wobei der in der Ausgangsmenge 2 enthaltende Chromkomplex-Farbstoff gleichmäßig über das Volumen des Formkörpers verteilt in das Polyamid eingebaut wird.

Neben dem hier dargestellten beispielhaften Prozeßablauf sind weitere Prozeßabläufe denkbar, die sich im Rahmen der vorliegenden Erfindung bewegen. So kann bspw. der Chromkomplex-Farbstoff anstelle der Ausgangsmenge 2 auch der Ausgangsmenge 1 zugesetzt werden, oder es können nur eine oder mehr als zwei Ausgangsmengen genutzt werden, es kann die Mischstrecke 6 fortfallen.

### Bezugszeichenliste

- 1: Ausgangsmenge
- 2: Ausgangsmenge
- 3: Gießform
- 4: Zulauf
- 5: Zulauf
- 6: Mischstrecke
- 7: Temperaturregelung
- 8: Temperaturregelung
- 9: Temperaturregelung
- 10: Regelung für weitere Prozeßparameter
- 11: Regelung für weitere Prozeßparameter
- 12: Regelung für weitere Prozeßparameter

## Patentansprüche

1. Verfahren zur Herstellung von Formkörpern mit Farbkodierung aus Polyamiden mittels Polymerisation von Lactamen, wobei die Lactame zur Bildung von Formkörpern in eine Gußform verbracht werden und die Polymerisation in dieser Gußform stattfindet,
**dadurch gekennzeichnet,**
daß in einem im zeitlichen Verfahrensablauf vor der Polymerisation erfolgenden Verfahrensschritt einer Ausgangsmenge der zu polymerisierenden Lactame ein Chromkomplex-Farbstoff zugegeben wird, welcher während der Polymerisation in das dabei entstehende Polyamid eingebunden wird.

2. Verfahren nach Anspruch 1, dadurch gekennzeichnet, daß als Chromkomplex-Farbstoff ein Monoazo-Chromkomplex-Farbstoff verwendet wird.

3. Verfahren nach Anspruch 2, dadurch gekennzeichnet, daß als Chromkomplex-Farbstoff ein Monoazo 1:2 Chromkomplex-Farbstoff verwendet wird.

4. Verfahren nach einem der vorhergehenden Ansprüche, dadurch gekennzeichnet, daß der Chromkomplex-Farbstoff in geringer Konzentration verwendet wird.

5. Verfahren nach einem der vorhergehenden Ansprüche, dadurch gekennzeichnet, daß mindestens zwei Lactame enthaltende Ausgangsmengen zur Polymerisation zusammengeführt werden.

6. Verfahren nach Anspruch 5, dadurch gekennzeichnet, daß eine erste Ausgangsmenge neben den Lactamen als Katalysatoren wirkende Zusätze und eine zweite Ausgangsmenge neben den Lactamen als Aktivatoren wirkende Zusätze aufweist.

7. Verfahren nach Anspruch 6, dadurch gekennzeichnet, daß der Farbstoff vor dem Zusammenführen der Ausgangsmengen in die zweite Ausgangsmenge eingegeben wird.

8. Verfahren nach einem der Ansprüche 5 bis 7, dadurch gekennzeichnet, daß die Ausgangsmengen vor dem Zusammenführen erwärmt werden.

9. Verfahren nach Anspruch 8, dadurch gekennzeichnet, daß die Ausgangsmengen auf Temperaturen von 100° C bis 200° C erwärmt werden.

10. Verfahren nach Anspruch 8, dadurch gekennzeichnet, daß die Ausgangsmengen auf Temperaturen von 155° C bis 175° C erwärmt werden.

11. Verfahren nach Anspruch 8, dadurch gekennzeichnet, daß die Ausgangsmengen auf Temperaturen von 110° C bis 130° C erwärmt werden.

12. Verfahren nach einem der vorhergehenden Ansprüche, dadurch gekennzeichnet, daß die Gußform zur Durchführung der Polymerisation vor Einbringen der Lactame erwärmt wird.

13. Verfahren nach einem der vorhergehenden Ansprüche, dadurch gekennzeichnet, daß als Lactarn Laurinlactam verwendet wird, welches zu Polyamid-12 polymerisiert.

14. Verfahren nach einem der Ansprüche 1 bis 12, dadurch gekennzeichnet, daß als Lactam Caprolactam verwendet wird, welches zu Polyamid-6 polymerisiert.

## Claims

1. Process for preparing colour-coded polyamide mouldings by polymerization of lactams by introducing the lactams into a casting mould to form mouldings and conducting the polymerization in this mould, characterized in that in a process step prior to the polymerization a starting amount of the lactams to be polymerized is admixed with a chromium complex dye which during the polymerization becomes bound into the polyamide being formed.

2. Process according to Claim 1, characterized in that the chromium complex dye used is a monoazo chromium complex dye.

3. Process according to Claim 2, characterized in that the chromium complex dye is a monoazo 1:2 chromium complex dye.

4. Process according to any of the preceding claims, characterized in that the chromium complex dye is used in a low concentration.

5. Process according to any of the preceding claims, characterized in that at least two lactam starting amounts are converged for polymerization.

6. Process according to Claim 5, characterized in that a first starting amount comprises catalytically active additives as well as the lactams and a second starting amount comprises activator additives as well as the lactams.

7. Process according to Claim 6, characterized in that the dye is introduced into the second starting amount before the starting amounts are converged.

8. Process according to any of Claims 5 to 7, characterized in that the starting amounts are heated before converging.

9. Process according to Claim 8, characterized in that the starting amounts are heated to temperatures of 100°C to 200°C.

10. Process according to Claim 8, characterized in that the starting amounts are heated to temperatures of 155°C to 175°C.

11. Process according to Claim 8, characterized in that the starting amounts are heated to temperatures of 110°C to 130°C.

12. Process according to any of the preceding claims, characterized in that the casting mould for conducting the polymerization is heated before the lactams are introduced.

13. Process according to any of the preceding claims, characterized in that the lactam used is laurolactam, which is polymerized to form nylon-12.

14. Process according to any of Claims 1 to 12, characterized in that the lactam used is caprolactam, which is polymerized to form nylon-6.

## Revendications

1. Procédé de fabrication de pièces moulées en polyamides comportant un codage couleur au moyen de polymérisation de lactames, les lactames étant introduits dans un moule de coulée pour la formation de pièces moulées, et la polymérisation ayant lieu dans ce moule de coulée,
caractérisé en ce que,
dans une phase de procédé effectuée dans la chronologie du déroulement de procédé avant la polymérisation, un colorant de complexe de chrome est ajouté à une quantité de départ des lactames à polymériser, lequel est enlié pendant la polymérisation dans le polyamide en cours de formation.

2. Procédé selon la revendication 1, caractérisé en ce qu'un colorant de complexe de monoazo-chrome est utilisé en tant que colorant de complexe de chrome.

3. Procédé selon la revendication 2, caractérisé en ce qu'un colorant de complexe de monoazo 1:2 de chrome est utilisé en tant que colorant de complexe de chrome.

4. Procédé selon l'une quelconque des revendications précédentes, caractérisé en ce que le colorant de complexe de chrome est utilisé à une faible concentration.

5. Procédé selon l'une quelconque des revendications précédentes, caractérisé en ce qu'au moins deux quantités de départ contenant des lactames sont mélangées pour la polymérisation.

6. Procédé selon la revendication 5, caractérisé en ce que, outre les lactames, une première quantité de départ contient des additifs faisant office de catalyseurs, et en ce que, outre les lactames, une deuxième quantité de départ contient des additifs faisant office d'activateurs.

7. Procédé selon la revendication 6, caractérisé en ce que le colorant est ajouté à la deuxième quantité de départ avant le mélange des quantités de départ.

8. Procédé selon l'une quelconque des revendications 5 à 7, caractérisé en ce que les quantités de départ sont chauffées avant d'être mélangées.

9. Procédé selon la revendication 8, caractérisé en ce que les quantités de départ sont portées à des températures de 100 °C à 200 °C.

10. Procédé selon la revendication 8, caractérisé en ce que les quantités de départ sont portées à des températures de 155 °C à 175 °C.

11. Procédé selon la revendication 8, caractérisé en ce que les quantités de départ sont portées à des températures de 110 °C à 130 °C.

12. Procédé selon l'une quelconque des revendications précédentes, caractérisé en ce que, pour l'exécution de la polymérisation, le moule de coulée est chauffé avant l'introduction des lactames.

13. Procédé selon l'une quelconque des revendications précédentes, caractérisé en ce que, en tant que lactame, il est utilisé du lauratelactame qui est polymérisé en polyamide 12.

14. Procédé selon l'une quelconque des revendications 1 à 12, caractérisé en ce que, en tant que lactame, il est utilisé du caprolactame qui est polymérisé en polyamide 6.
